# EUROPEAN PATENT SPECIFICATION

(11) **EP 1 789 465 B1**
(45) Date of publication and mention of the grant of the patent: **26.08.2009**
(21) Application number: 05793294.9
(22) Date of filing: 02.09.2005
(51) Int. Cl.: C08G 18/70, C09D 175/04, C08G 18/75, C08G 18/79

(54) **EMULSIFIABLE POLYISOCYANATE**
EMULGIERBARES POLYISOCYANAT
POLYISOCYANATE EMULSIFIABLE

(30) Priority: 03.09.2004 US 607106 P
(43) Date of publication of application: 30.05.2007
(73) Proprietor: DOW GLOBAL TECHNOLOGIES INC., Midland MI 48674 (US)
(72) Inventor: ERDEM, Bedri, MI 48640, Midland (US); JIMENEZ, Jorge, Lake Jackson, TX 77566 (US); BHATTACHARJEE, Debkumar, Lake Jackson, TX 77566 (US); ARGYROPOULOS, John, N., Midland, MI 48640 (US)
(74) Representative: Hayes, Adrian Chetwynd
(86) International application number: PCT/US2005/031684
(87) International publication number: WO 2006/029140

(56) References cited:
- EP-A- 1 044 998
- WO-A-20/04041890
- US-A- 4 663 377

## Description

### EMULSIFIABLE POLYISOCYANATE

This invention relates to aqueous adhesive or aqueous coatings comprising an emulsifiable polyisocyanates composition.

Due to increasingly stringent environmental legislation, water dispersible polyisocyanates have in recent years become increasingly important in a number of fields of application.

Water dispersible polyisocyanates play a particular role today as crosslinking components for water reducible, one component and two-component polyurethane coating compositions. Combined with aqueous polyol dispersions, they enable solvent-free coating compositions to be formulated which cure at room temperature to give high quality coatings with good resistance to solvents and chemicals. See for example, U.S. Patent 5,331,039 and EP Publications 562 282 and 583 728.

Water dispersible polyisocyanate preparations are additionally important as additives for aqueous adhesive dispersions. They contribute, for example, towards considerably improved heat and water resistance in adhesives for various materials.

Water dispersible (cyclo)aliphatic polyisocyanates are described in U.S Patent 4,663,377. They contain as emulsifiers reaction products of polyisocyanates and monohydric or polyhydric polyalkylene oxide alcohols having at least one polyether chain with at least 10 ethylene oxide units. The products are disclosed as useful as additives for aqueous adhesives.

The use of fast reacting isocyanurates based on aliphatic isocyanates, such as 1,6-hexamethylene diisocyanate (HDI), generally result in formulations having a short pot-life. In addition, while films produced from such products have good flexibility, the hardness is often less than desired. The use of trimers produced from cycloaliphatic isocyanates such as 4,4'-dicyclohexanemethylene diisocyanate (H12MDI) and isophorone diisocyanate (IPDI) can increase the pot-life, however their reactivity is generally too slow to obtain the desired properties in the timeframe of applications due to their very low reactivity with hydroxyls or acids.

WO 2004/078820, published on 16 September 2004, describes a process for preparing isocyanurate group-containing polyisocyanate mixtures.

Accordingly, it is an object of the present invention to provide modified polyisocyanates based on bis(isocyanatomethyl)cyclohexane which are liquid, do not require the use of organic solvents for dispersion in water and have improved properties when compared to prior art liquid, modified polyisocyanates based on for example, HDI, IPDI When used in coating applications, such emulsifiable polyisocyanates have improved mechanical properties as measured by the balance of film hardness and flexibility.

The present invention is an aqueous adhesive or aqueous coating composition comprising an emulsifiable polyisocyanate common comprising the reaction product of
(a) an aliphatic polyisocyanate and
(b) an emulsifier, wherein the polyisocyanate contains at least 10 percent by weight of isocyanurate moieties, and comprises a mixture of two or more of cis-1,3-bis(isocyanatomethyl)cyclohexane, trans-1,3-bis(isocyanatomethyl)cyclohexane, cis-1,4-bis(isocyanatomethyl)cyclohexane or trans-1,4-bis(isocyanatomethyl)cyclohexane, or a reaction product of this mixture, with the proviso said isomeric mixture comprises at least 5 weight percent of said trans1,4-bis(isocyanatomethyl)cyclohexane.

In a preferred embodiment a coating or adhesive composition of the present invention further comprises a water dispersible or the soluble polymer.

Due to the defined isomer ratios, the emulsifiable polyisocyanates use in the present invention have advantageous properties, such as high reactivity, low viscosity, good solubility and improved storage stability. In additions, when used in formulations for coating applications, coatings prepared from such emulsifable polyisocyanates exhibit a good balance of hardness to flexibility.

The polyisocyanate compositions used in the present invention exhibit excellent dispersibility in water and higher stability in the form of an aqueous dispersion thereof, since a reaction between the terminal isocyanate groups and water is suppressed compared to corresponding derivatives from HDI. While not wishing to be bound by theory, it is believed the increase in storage stability is due to reduced reactivity of the isocyanate in the present composition compared to HDI derivatives. The present emulsifiable polyisocyanates employed in the present invention may undergo self-crosslinking when exposed to water in addition to reacting with isocyanate reactive functional groups such as hydroxyl and carboxyl. Further, a crosslinkable two-pack aqueous urethane coating composition, which comprises an aqueous polyol as a main agent and the polyisocyanate composition used in the present invention as a curing agent, has not only excellent pot life characteristics, but also is capable of forming a coating which has excellent properties, such as excellent chemical and water resistance, so that such an aqueous coating composition can be advantageously used in various aqueous paints, adhesives, building materials and sealing materials. The emulsifiable polyisocyanates may also be used in combination with one-pack aqueous polyurethane dispersions typically used in the industry.

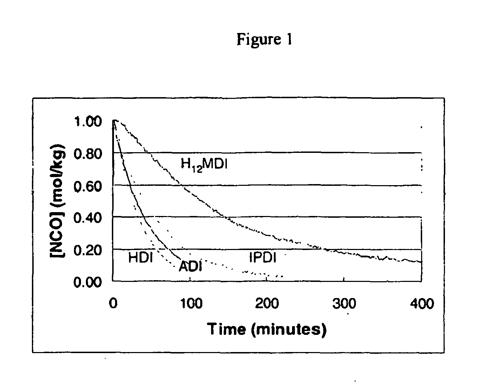

Figure 1 shows the reduction in NCO moieties of various polyisocyanates as described in Example 1.

The emulsifiable polyisocyanate employed in the present invention are based on a mixture of two or more of cis-1,3-bis(isocyanatomethyl)cyclohexane, trans-1,3-bis(isocyanatomethyl)cyclohexane, cis-1,4-bis(isocyanatomethyl)cyclohexane and trans-1,4-bis(isocyanatomethyl)cyclohexane, with the proviso said isomeric mixture comprises at least 5 weight percent of the 1,4-isomer. The preferred cycloaliphatic diisocyanates are represented by the following structural Formulas I through IV:

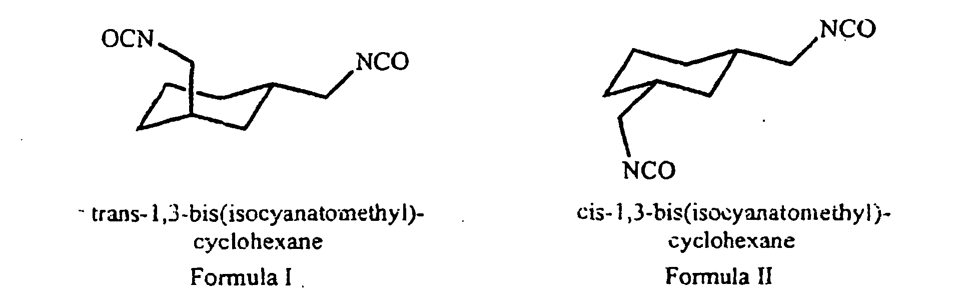

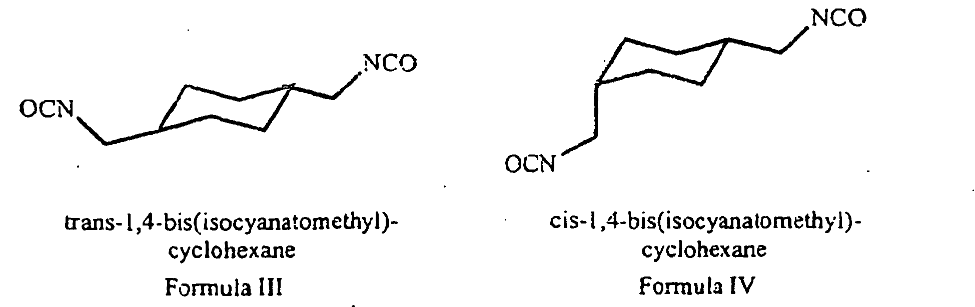

In one preferred embodiment, the composition is derived from a mixture containing from 5 to 90 weight percent of the 1,4-isomers. Preferably the isomeric mixture comprises 10 to 80 wt percent of the 1,4-isomers. More preferably at least 20, most preferably at least 30 and even more preferably at least 40 weight percent of the 1,4-isomers.

These cycloaliphatic diisocyanates may be used in admixture as manufactured from, for example, the Diels-Alder reaction of butadiene and acrylonitrile, subsequent hydroformylation, then reductive amination to form the amine, that is, cis-1,3-cyclohexane-bis(aminomethyl), trans-1,3-cyclohexane-bis(aminomethyl), cis-1,4-cyclohexanc-bis(aminomethyl) and trans-1,4-cyclohexane-bis(aminomethyl), followed by reaction with phosgene to form the cycloaliphatic diisocyanate mixture. The preparation of the cyclohexane-bis(aminomethyl) is described in U.S. Patent 6,252,121.

The polyisocyanates or polyisocyanate mixtures may further contain carbodiimide groups, urethane groups, uretdione groups, allophanate groups, isocyanurate groups, biuret groups, oxadiazinetrione groups, uretonimine groups and/or urea groups. Generally a polyisocyanate having a biuret structure has excellent adhesion properties. A polyisocyanate having an isocyanurate structure has excellent weathering properties. A polyisocyanate having a urethane structure, which is produced using an alcohol having a long pendant chain, has high elasticity and excellent elongation properties. And generally polyisocyanate having a urethodione structure or an allophanate structure has a low viscosity.

Optionally, other multifunctional isocyanates can be used in the above isomer mixture. Illustrative of such isocyanates are 2,4- and 2,6-toluene diisocyanates, 4,4'-biphenylene diisocyanate, 4,4'-diphenylmethane diisocyanate, meta- and para-phenylene diisocyanates, 1,5-naphthylene diisocyanate, 1,6-hexamethylene diisocyanate, bis(2-isocyanato)fumarate, 4,4'dicyclohexanemethyl diisocyanate, 1,5-tetrahydronaphthylene diisocyanate, and isophorone diisocyanate. The minor amounts of other multifunctional isocyanates can range from 0.1 percent to 50 percent or more, preferably from 0 percent to 40 percent, more preferably from 0 percent to 30 percent, even more preferably from 0 percent to 20 percent and most preferably from 0 percent to 10 percent by weight of the total polyfunctional isocyanate used in the formulation.

The emulsifable polyisocyanates contain at least 10 percent by weight of isocyanurate moieties. Preferably the emulsifiable polyisocyanates contain at least 20 percent and more preferably at least 30 percent by weight of isocyanurate moieties.

For the preparation of the isocyanurate group-containing polyisocyanates, the organic diisocyanates are cyclized in the presence of the trimerization catalyst and, if desired, in the presence of solvents and/or assistants, such as co-catalysts, expediently at elevated temperature, until the desired isocyanate (NCO) content has been reached. The reaction is then terminated by deactivating the catalyst. If desired, the excess monomeric diisocyanate is separated off, preferably by distillation with the aid of a thin-film evaporator. Depending on the type and amount of catalyst used and on the reaction conditions used, isocyanurate group-containing polyisocyanate mixtures are obtained which can have different content of uretedione groups or oligomeric isocyanates. As used herein, the term trimer will generally refer to molecules containing one or more isocyanurate ring structures. For purposes of this invention, an isocyanate containing one isocyanurate ring structure is referred to herein as IR1. Molecules containing two isocyanurate ring structures are referred to herein as IR2. As a general class, unless otherwise noted, compounds containing 2 or more isocyanurate rings based on the polyisocyanates used in the present invention are referred to as oligomeric trimers.

Examples of suitable trimerization catalyst are tertiary amines, phosphines, alkoxides, metal oxides, hydroxides, carboxylates and organometallic compounds. Examples of trimerization catalysts which have proven highly successful are tris-(N,N-dialkylaminoalkyl)-s-hexahydrotriazines and organic salts of weak acids containing tetraalkylammonium groups of hydroxyalkylammonium groups, for example, tris-(N,N-dimethylaminoproyl)-s-hexahydrotriazine, trimethyl-N-w-hyroxypropylammonium 2-ethylhexanoate and N,N-dimethyl-N-hydroxyethyl-N-2-hydroxypropylammonium hexanoate. Due to the their simple preparation and purification, preferred trimerization catalysts are trialkylhydroxyalkylammunium salts, for example, N,N,N-trimethyl-N-2-hydroxypropylammonium p-tert-butylbenzoate and in particular N,N,N-trimethyl-N-2-hydroxypropylammonium 2-ethylhexanoate. Trimerization catalysts, which can also cause the formation of uretedione groups and oligomeric isocyanurate groups as byproducts, are usually used in an amount of from 0.001 to 0.5 percent by weight, preferably from 0.005 to 0.1 percent by weight, based on the weight of the diisocyanate. The trimer may also be produced by the use of a heterogeneous catalyst.

Alternatively, the isocyanurate trimer may be prepared by trimerization with a heterogeneous catalyst, see for example, WO 93/18014.

Proper control of the solid support and the active groups on the catalyst can result in the formation of an oligomeric mixture of isocyanurate trimers with very narrow polydispersity, that is, a product containing less than 50 percent IR1 and more than 25 percent of IR2, preferably less than 40 percent IR1 And more than 30 percent IR2. This type of distribution provides high average molecular weight products with low viscosity.

After the desired amount of isocyanurate groups has formed, which can be determined analytically by determination of the of the NCO content of the reaction mixture, the trimerization catalyst is usually deactivated. Examples of suitable deactivators are inorganic and organic acids, the corresponding acid-halides and alkylating agents. Specific examples of deactivators include phosphoric acid, monochloroacetic acid, dodecylbenzene/sulfonic acid, benzoyl chloride, dimethyl sulfate and dibutyl phosphate.
The deactivators can be employed in amount from 1 to 200 mole percent, preferably from 20 to 100 mole percent, based on the amount of trimerization catalyst. The catalyst can also be deactivated by thermolysis. Typical thermal deactivation temperatures are greater than 130°C and lower than the decomposition temperatures of the isocyanate, generally less than 200°C.

For the preparation of the isocyanurate, the organic diisocyanate are partially cyclized at from 30 to 120°C, preferably at from 60 to 110°C, in the presence of the trimerization catalysts, advantageously under an atmosphere of gases which are inert under the reaction conditions, for example, nitrogen. Generally the cyclized reaction is carried out to leave a monomer content of less than 80 percent. Preferably the reaction is carried out to give a monomer content of less than 70 percent. Generally at high conversions the amount of monomer remaining in the reaction mixture is between 20 and 40 percent. More preferably the reaction is carried out to give a final monomer content of less than 65 percent.
The desired NCO content of the reaction mixture (that is, trimer and unreacted monomer) is generally from 20 to 40 percent by weight. Preferably the desired NCO content of the reaction mixture is from 22 to 38 percent by weight and more preferably from 23 to 35 percent by weight. After the desired NCO content is reached, the trimerization catalyst is deactivated and the isocyanurate formation is thus ended. After removal of the unreacted monomer, the NCO content of the trimer and trimer oligomers (IR1, IR2, and higher oligomers) is generally from 12 to 30 percent by weight and more preferably from 15 to 21 percent by weight of the isocyanurate polyisocyanate.

The reaction product will generally contain monomeric species, for example, isocyanurates having a single ring structure, as well as oligomeric species, for example, isocyanurates having two or more ring structures. Preferably IR1 is present in the composition from 20 to 80 percent by weight of the composition. More preferably the IR1 content is from 25 to 70 percent by weight of the composition. Most preferably the IR1 content is from 25 to 65 percent by weight of the composition. Generally the composition will contain from 5 to 40 percent by weight of IR2. It is not necessary for the IR1 and IR2 components to be 100 percent of the composition as higher oligomers may also be present.

For the present invention, different polyisocyanates may be mixed prior to the trimerization step, or trimers and higher oligomers of the individual isomers may be formed and then blended together. For example, trimers and higher oligomers of the 1,3-and 1,4-isomers of bis(isocyanatomethyl)cyclohexane may be separately produced and the products mixed, or the 1,3- and 1,4-isomers can be present together before the trimerization step. In a similar manner, the isocyanurate polyisocyanates containing multifunctional isocyanates other than bis(isocyanatomethyl)cyclohexane can be produced by having the other multifunctional isocyanates present prior to trimerization or produced separately and blended in with the isocyanurate polyisocyanates produced from the bis(isocyanatomethyl)cyclohexane isomers. It is generally preferred to produce isocyanurate polyisocyanates from the 1,3- and 1,4- isomers when both isomers are present in the initial reaction mixture. It is also preferred that any other multifunctional isocyanates be present prior to the start of or during the trimerization reaction.

When using a blend of isocyanates, in one preferred embodiment of the present invention, a mixture of 1,3- and 1,4-bis(isocyanatomethyl)cyclohexane monomers with 1,6-hexamethylene diisocyanate (HDI). The amount of HDI present is as per given for the amounts of other isocyanates as described above.

The production of the isocyanurate polyisocyanates employed in the present invention is preferably done in the absence of a solvent. If desired, a solvent may be used which is inert toward the respective starting materials. Preference is given to using organic solvents such as diethyl ether, tetrahydrofuran, acetone, 2-tutanone, methyl isobutyl ketone, ethyl acetate, butyl acetate, benzene, toluene, chlorobenzene, o-dichlorolbenzene, xylene, methyoxyethyl acetate, methoxypropyl acetate, ethyl-3-ethoxy propionate, dimethylformamide, dimethylacetamide or solvent naphtha.

Procedures to modify the polyisocyanates to include other functionalities are well known in the art. For example, preparation of allophanate or biuret prepolymers, followed by timerization is disclosed in U.S. Patents 5,663,277 and 6,028,158.

In general the allophanate modified isocyanates are prepared by reacting the isocyanate with an organic compound containing at least one hydroxyl group at a temperature from 50 to 200°C in the presence of an allophanate-trimer catalyst.

Furthermore, the addition of a carbodiimide catalyst, such as trialkylphosphate or a phospholene oxide after formation of the timer will allow modifications of the isocyanate to include carbodiimide groups. Carbodiimides may also be formed from the reaction of polyisocyanate monomers in the presence of a carbodiimide catalyst. The carbodiimide groups can react further with a monomeric diisocyanate to form a uretonimine-modified monomeric product. Addition of an acid as catalyst facilitates further reaction of the uretonimines with monomeric diisocyanate to give a six-membered ring cyclic adduct, for example, inimo-s-triazires.

The average functionality of the emulsifiable polyisocyanates used in the present invention is from 2 to 4.5.

For the preparation of the water-emulsifiable polyisocyanates, the polyisocyanates defined above are reacted with a hydrophillic agent or emulsifier which is a compound having at least one hydrophilic group and at least one group reactive with isocyanate, for example, hydroxy, mercapto or primary or secondary amine.

The hydrophilic group may be, for example, an ionic group or a group convertible into an ionic group or a nonionic polyoxyalkylene compound containing sufficient ethylene oxide (EO) to give the compound hydrophobic properties.

Anionic groups or groups convertible into anionic groups are, for example, carboxyl and sulfo groups. Examples of suitable compounds are hydroxycarboxylic acids, such as hydroxapivalic acid or dimethylol propionic acid, and hydroxy and aminosulfonic acids such as, amino butanoic acid, amino carproic acid, amino lauryic acid, 2-cyclohexylamine)-ethane-sulfonic acid (CHES), and 3-(cyclohexylaino)-propane-sulfonic acid (CAPS), or any desired mixture thereof.

In order to convert carboxyl or sulfo groups into anionic groups, inorganic and/or organic bases, such as sodium hydroxide, potassium hydroxide, potassium carbonate, sodium bicarbonate, ammonia or primary, secondary or in particular tertiary amines, eg. triethylamine or dimethylaminopropanol, may be used.

Cationic groups or groups convertible into cationic groups are, for example, tertiary amino groups which are converted into quaternary ammonium salts after neutralization with and organic or inorganic acid. Examples of suitable neutralizing agents acids include hydrochloric acid, acetic acid, fumaric acid, maleic acid, lactic acid, tartaric acid, oxalic acid or phosphoric acid.

Nonionic groups are, for example, polymers containing polyalkylene ether group, in particular ethylene oxide unit-containing polyethylene alcohols and copolymers of EO with propylene oxide (PO), butylene oxide (BO), styrene oxide, etc. where the copolymers contain sufficient EO to maintain the hydrophilic properties of the polymers. Preferably the nonionic polymers contain at least 1 polyethylene chain containing at least 5, generally 5 to 100, preferably 10 to 70, and more preferably 15-50 ethylene oxide units. The polyether chains present in the emulsifiers generally are either pure polyethylene oxide chains or mixed polyalkylene oxide chains wherein the alkylene oxide units comprise at least about 60 percent of ethylene oxide. The corresponding monohydric ether alcohols are particularly well suited for the production of the emulsifiers Suitable polyoxyalkylene alcohols of this type, which may contain the oxyalkylene groups bonded blockwise or randomly, can be prepared in a manner known per se by the polyaddition of ethylene oxide, 1,2-propylene oxide or mixtures thereof onto a mono or di-functionat initiator molecule.

Preferably the polyalkylene ethers have between 5 (220 MW) and 100 (4400 MW) ethylene oxide units, preferably the polymers contain blocks of EO. More preferably the molecular weight of the polyalkylene ethers is between 300 and 2500, more preferably between 500 and 2000.

Hydroxy functional monols and polyols which may be employed in the invention include mono-hydroxy functional polyoxyethylene monols, dihydroxy functional polyoxyethylene glycols, mono-hydroxyfunctional polyoxyethylene-polyoxypropylene monol, and dihydroxy functional EO/PO glycols. Preferably, the mono-hydroxy functional polyoxyethylene monol and the monohydroxy functional EO/PO monols are those available under the tradenames Carbowax MPEG and UCON. The monols can be prepared from initiators like butanol, methanol and allyl alcohol.

Carbowax MPEG mono-hydroxy functional polyoxyethylene monols have an all ethylene oxide (EO) backbone and a molecular weight of 100 to 5000. The Carbowax MPEGs used in the invention preferably have a molecular weight of from 300 to 800. The UCON monohydroxy functional EO/PO glycols have a molecular weight of from 270 to 3930.

Dihydroxy functional polyoxyethylene glycols and the dihydroxy functional EO/PO glycols preferably are those available under the tradenames Carbowax PEG and UCON. The Carbowax dihydroxy polyoxyethylene glycols employed in the invention have a molecular weight of 500 to 2500, preferably 600 to 800. The UCON dihydroxy functional EO/PO glycols employed in the invention have a molecular weight of 500 to 5000, preferably 980 to 2500.

The reaction of the polyisocyanate, preferably containing isocyanurate rings, with the hydrophilic agent is done at an NCO to the isocyanate reactive group (OH) of hydrophillic agent at a ratio so the final emulsifiable polyisocyanate contains 0.5 to 40 weight percent, preferably from 1 to 30, and more preferably from 2 to 25 and may be from 2 to 21 weight percent in the emulsifiable polyisocyanates.

In the preparation of the water-emulsifiable polyisocyanates, the compounds containing at least one hydrophilic group and at least one group reactive toward isocyanate may be reacted with some of the polyisocyanate, and the resulting hydrophilized polyisocyanates can then be mixed with the remaining polyisocyanates; a multi-step process. However, the preparation may also be carried out by adding the compounds to the total amount of the polyisocyanates and then effecting the reaction in situ; a one-step process.

Preferred water-emulsifiable polyisocyanates are those containing hydrophilic, nonionic groups, in particular polyalkylene ether groups. The water emulsifiability is preferably achieved exclusively by the hydrophilic nonionic groups.

In preparing the emulsifiable polyisocyanates, preferably an excess of NCO to isocyanate reactive moiety (that is OH) on the hydrophilic agent is used. Generally an NCO/OH equivalent ratio of at least 1.05:1 is used. Preferably the ratio is 2:1 to 20:1. The production of the emulsifiable polyisocyanates generally takes place at a moderately elevated temperature of from 50 to 130°C, optionally in the presence of a suitable catalyst.

It some applications it may be desirable to have emulsions in which the polyisocyanate contains a blocking group. Such blocking agents include, for example, oximes, phenols, caprolactam, imidazoles and active methylene compounds.

In order to reduce the viscosity of the polyisocyanate preparations, small quantities, that is, 1 to 10 percent by weight based on the solvent- free preparation, of an organic solvent such as ethylacetate, acetone or methylketone can be added to the preparations before they are used according to the invention. It is also possible to process the polyisocyanate preparations used in the invention in the form of aqueous dispersions with a solids content of 10 to 65 percent by weight. The production of these dispersions and emulsions takes place shortly before the use according to the invention by mixing the polyisocyanate preparations with water.

The emulsifiable polyisocyanates used in the present invention are used for adhesives or coatings. The emulsitiable polyisocyanates used in the present invention can also be useful for foams, producing paints and varnishes, impregnating materials and sealants.

The emulsifiable polyisocyanates used in the present invention can be used as crosslinking or hardening component of coating composition which will be apparent to those skilled in the art. They are particularly suited for one or two component polyurethane surface coating materials, environmentally etch-resistant top coats, base coat, wood coating, architectural coating, industrial coating, leather coating and textile coating. In one approach, the coating composition comprises (1) a dispersion of the polyisocyanate and (2) a water dispersible/soluble polyhydroxy compound, like polyacrylate, polyester, polyether known to those in the art. Preferably water soluble/dispersible aliphatic polyester and acylic polyols are used. In another approach, the emulsifiable polyisocyanates could be combined with natural latex, aqueous dispersions of homo or copolymers of olefinically unsaturated monomers, acrylic dispersions, styrene-butadiene dispersions and the aqueous polyurethane dispersions. The coating compositions may also contain other additives known per se in the art, such as pigments, dyes, fillers, leveling agents and solvents.

Suitable dispersion of homo or copolymers of olefinically unsaturated monomers include known dispersion of vinyl esters of carboxylic acids having 2 to 18, preferably 2 to 4 carbon atoms such as vinyl acetate, optionally with homo or copolymers (meth)acrylic acid esters of alcohols having from 1 to 18, preferably from I to 4 carbon atoms. Examples include (methyl)acrylic acid or methyl, ethyl, propyl, hydroxyethyl or hydroxypropyl esters thereof. Examples of suitable polyurethane dispersions are described for example, in U.S. Patents 3,479,3 10; 4,108,814; and 4,190,566.

The polyisocyanate preparations are particularly suitable for modifying aqueous adhesives. Examples of aqueous adhesives include natural latex, aqueous dispersions of homo or copolymers of olefinically unsaturated monomers, acrylic dispersions, styrene-butadiene dispersions and the aqueous polyurethane dispersions. These dispersions can naturally contain the auxiliaries and additives which are conventional in adhesive technology.

Examples of auxiliaries and additives include organic and inorganic fillers, suitable wetting agents, antifoams, leveling agents, thickeners fungicides, pigments or colorants, bactericides, flow control agents and tacking resins. The quantity of such additives to be used in the adhesives is known or can be determined by methods known to those skilled in the art.

The aqueous dispersions thus modified are suitable for bonding selected materials of the same or different type, for example, bonding wood and paper, plastics materials, textiles, leather and inorganic materials such as ceramics, earthenware or asbestos cement.

The addition of the polyisocyanate preparations to the aqueous adhesives and coatings formulation causes, in particular, an improvement in the heat resistance, water resistance, solvent resistance, chemical resistance when compared with the corresponding adhesives basedon aromatic and HDI polyisocyanates.

When the emusifiable polyisocyanates or derivatives thereof are used in the above described applications, the composition can optionally be mixed with a solvent, such as toluene, xylene, butyl acetate, methylethyl ketone, ethyl acetate, dioxane or mixtures thereof; or plasticizers such as those based on adipate, phthalate or phosphate may also be added to the aqueous adhesive dispersions.
Depending on the type of adhesive or coating application the solids content of the dispersion can vary from 1 to 65 percent by weight, preferably 2 to 60 percent by weight of the composition. The emulsifiable polyisocyanate generally comprises from 0.3 to 15 wt. percent, preferably from 0. 5 to 10 wt percent, more preferably from 1.0 to 6.0 wt. percent of the total formulation.

Coatings prepared from the emulsifiable polyisocyanate have good chemical and solvent resistance and provide coatings with good optical properties, in particular high surface gloss.

Aqueous emulsions of emulsifiable polyisocyanates are prepared by blending the emulsifiable polyisocyanate with water at the desired weight ratio under vigorous agitation until the isocyanate is visibly completely emulsified, as indicated by a uniformly cloudy liquid. The stability (potlife) of the resulting aqueous emulsion is measured by changes in viscosity of the liquid vs. time- Viscosities are measured every 30-60 minutes using a Brookfield viscometer. The potlife of the emulsion is defined as the time when the change in the difference between successive viscosity measurements is more than 100 percent compared to the immediately preceding viscosity measurement.

The following examples are provided to illustrate the present invention. The examples are not intended to limit the scope of the present invention and should not be so interpreted. All percentages are by weight unless otherwise noted.

### Examples

The ingredients and tests used in the examples are as described in the following glossary:
Trimer 1 -A polyisocyanate of isophorone diisocyanate (IPDI) commercially available from
Degussa Corporation as VESTANATE^{™} T 1890..
Trimer 2 - A polyisocyanurate of an approximate 1:1 mixture of 1,3-cyclohexane-bis(isocyanatomethyl) and 1,4-cyclohexanebis(isocyanatomethyl).
Trimer 3 - A polyisocyanurate of 1,3-cyclohexane-bis(isocyanatomethyl)
Trimer 4 - A polyisocyanurate of hexamethylene diisocyanate commercially available from
Rhodia as TOLONATE^{™} HDT 90.
Emulsifiable Trimers - The individual Trimers reacted with 25wt percent of monol 2.
Monomer 1 - 1,3-cyclhexane-bis(isocyanatomethyl) commercially available from Aldrich.
Monomer 2 - 1,4-cyclohexan-bis(isocyanatomethyl).
Monomer 3 - 1:1 mixture of 1,3- and 1,4- cyclohexane-bis(isocyanatomethyl).
Monomer 4 - Isophorone diisocyanate commercially available from Aldrich.
Monomer 5 - Hexamethylene diisocyanate commercially available from Aldrich.
Monomer 6 - 4,4' methylene bis (cyclohexyl isocyanate) commercially available from Aldrich.
Monol 1 - 2-ethoxy-ethanol commercially available from Aldrich.
Monol 2 - Methoxy polyethylene glycol with an average MW of 950 g/mol commercially available from Dow as MPEG-950.
Catalyst 1 - Triethylamine (TEA) commercially available from Aldrich.
Dicap-1000 - is an emulsifiable diol(acid value 57.9, Eq. Wt. 480.3) available from Geo.
Ammonium benzoate is purchased from Aldrich

The pencil hardness of the film is measured by following ASTM D 3363. Impact resistance of the coating was determined by using a Gardner impact tester following ASTM D 2794.

Pendulum Hardness of the coating was determined by using a Koenig pendulum hardness tester and is reported in seconds.

### Preparation of Emulsifiable Trimers

The preparation of the polyisocyanurate of 1,3- cyclohexane-bis (isocyanatomethyl) and of the polyisocyanurate of a 1:1 mixture of 1,3- and 1,4-cyclohexane-bis (isocyanatomethyl) is as per the teachings of publication WO 2004/078820. The emulsifiable trimer of 1,3 -cyclohexane-bis(isocyanatomethyl) is prepared according to the following procedure. To a 453·6g (16-oz) glass jar is added 321.44 grams of the polyisocyanurate at 70 percent solids in butylacetate and 75 g of monol 2. The jar is placed in an oven for 6 hrs at 110 deg. C, with periodic shaking every 15-20 minutes. The completion of the reaction is indicated by narrow particle size distribution (Dᵥ = 80-100 nm) of the aqueous dispersion of the emulsifiable trimer. Emulsifiable trimers of other polyisocyanates/polyisocyanurates are done following the same procedure.

### Example 1. Higher Reactivity of ADI compared to IPDI

A set of reactions were performed using an RC-1 reactor/calorimeter with in-situ infrared spectroscopy (FT-IR). In a typical experiment, approximately 1 kg of 2-ethoxy-ethanol (2EE) was charged to the reactor and the contents were allowed to equilibrate to the desired temperature. Isocyanate was then injected and the FT-IR was used to monitor the disappearance of the NCO groups as well as the appearance of urethane linkages. No catalyst was used in any of the runs. Prior to each isocyanate injection and after the completion of the reaction a calibration was performed in the reactor/calorimeter in order to obtain values for the heat capacity as well as the heat of reaction. A list of the runs performed is shown in Table 1.

**Table 1. Initial charges and temperatures for the RC-1 runs.**

| Run # | 2EE (g) | Monomer Used | Isocyanate (g) | Temp. °C |
|---|---|---|---|---|
| 1 | 916.34 | 3 | 14.29 | 100 |
| 2 | 967.6 | 6 | 13.61 | 100 |
| 3 | 944.01 | 4 | 14.25 | 110 |
| 4 | 865.52 | 5 | 14.91 | 100 |

The disappearance of isocyanate groups for the experiments in Table 1 is shown in the Figure 1.

The difference in reactivity between the various isocyanates is evident. This difference increases as the system approaches total conversion of the isocyanate groups. The time needed to reach 90 percent conversion is ∼30 percent more for IPDI systems as compared to ADI systems. More important, the time to reach 98 percent conversion is significantly greater for IPDI systems as compared to ADI systems.

### Examples 2 (Relative Reactivity of Monomers to Monol 1)

For example 2, the procedure described for Example 1 is followed with monomer 1 (1,3-ADI), monomer 2 (1,4-ADI), monomer 3 (1,3-, 1,4-ADI) at a reaction temperature of 60°C. There is no observed difference in reactivity between the 1,3 cyclohexane-bis (isocyanatomethyl) and the 1:1 mixture of 1,3 and 1,4 cyclohexane-bis(isocyanatomethyl).

### Example 3 (Relative Reactivity of Dispersions of Emulsifiable Trimers)

A dispersion of the emulsifiable trimers is obtained by mixing 20 g of the emulsifiable trimer and 50 g of water in a 1 L flask using a high shear stirrer. A 1 g sample of the dispersion is then taken at different times and diluted with 9 grams of tetrahydroxyfuran (THF). FTIR is then used to measure the level of NCO in the dispersion. This procedure was used for dispersions of Emulsifiable trimers made from trimers 1, 2, 3 and 4. The reactivity of emulsifiable isocyanate follows the same trend as in Examples 1 and 2.

### Example 4-7 -- Preparation of Coatings

For preparation of coatings using the emulsifiable trimers the following procedure is used. The amounts of Dicap-1000 and emulsifiable trimers are adjusted so as to get an NCO/OH ratio of 2.0. The Dicap-1000 is weighed in a 907·2g (32-oz) flask and the material is melted. Under high shear, 1000 RPM, the emulsifiable trimer is added via a syringe. After the complete addition of the emulsifiable trimer, a high shear mixer is used at 3000 rpm. TEA and water are added to reach 35 percent solids.

To coat steel plate with the above dispersion, ammonium benzoate (1 percent based on solids) is added to 20g of dispersion. 10 mililiters of the dispersion with ammonium benzoate are spread on the steel plate using a #46 drawing bar. The film is dried for four days before measuring hardness and flexibility. Formulations used and the results obtained from these experiments are shown in Table 2.

**Table 2**

| Isocyanate Type | Example 4 1,3 ADI | Example 5 1,3 / 1,4 ADI | Example 6 IPDI | Example 7 HDI |
|---|---|---|---|---|
| Dicap-1000 | 34.50% | 35.00% | 33.80% | 38.10% |
| Emulsifyable Isocyanate | 65.50% | 65.10% | 66.20% | 61.90% |
| Percent Solids in PUD | 34.48% | 34.41% | 29.40% | 34.60% |
| Thickness, mil | 2.67 | 2 | 2.2 | 2.07 |
| Hardness, Koenig | 80 | 73 | 88 | 26 |
| Flexibility, ht (cm) | 10 | 15 | 10 | 160 |

The results in Table 2 show the coatings made with an emulsifiable trimer containing a polyisocyanurate made with our mixture leads to the best balance of hardness and flexibility. This data is consistent with the thermogavametric analysis of the films.

## Claims

1. An aqueous adhesive or aqueous coating comprising an emulsifiable polyisocyanate composition comprising the reaction product of
(a) an aliphatic polyisocyanate and
(b) an emulsifier
wherein the polyisocyanate contains at least 10 percent by weight of isocyanurate moieties, and comprises a mixture of two or more of cis-1,3-bis(isocyanatomethyl)cyclohexane, trans-1,3-bis(isocyanatomethyl)cyclohexane, cis-1,4-bis(isocyanatomethyl)cyclohexane or trans-1,4-bis(isocyanatomethyl)cyclohexane, or a reaction product of the mixture, with the proviso said isomeric mixture comprises at least 5 weight percent of said trans-1,4-bis(isocyanatomethyl)cyclohexane.

2. The adhesive or coating of claim 1, wherein the emulsifier has at least one hydrophilic group and at least one group reactive with isocyanate, selected from hydroxyl, mercapto or primary or secondary amine.

3. The adhesive or coating of claim 1, wherein the emulsifier contains an anionic group derived from a carboxyl or sulfo group.

4. The adhesive or coating of claim 1, wherein the emulsifier is a polyalkylene ether or a polymer which is a copolymer of alkylene oxides wherein the alkylene oxide is an ethylene oxide, propylene oxide, butylene oxide, or styrene oxide and the copolymers contain at least 1 polyethylene oxide chain containing at least 5 ethylene oxide units and the molecular weight of the polyalkylene oxide is from 300 to 2500.

5. The adhesive or coating of any of the preceding claims,
wherein the polyisocyanate and emulsifier are reacted at an NCO to an isocyanate reactive group on the emulsifier at a ratio to give an emulsifiable polyisocyanate containing 0.5 to 30 weight percent free NCO.

6. The adhesive or coating of any of the preceding claims where the polyisocyanate comprises at least 10 weight percent of the 1,4-isomers.

7. The adhesive or coating of claim 6, wherein the polyisocyanate comprises at least 20 to 80 weight percent of the 1,4-isomers.

8. The adhesive or coating of any one of the preceding claims, wherein the polyisocyanate comprises at least 20 weight percent of isocyanurate moieties.

9. The adhesive or coating of any of the preceding claims
wherein the composition comprises 0.1 to 50 weight percent of at least one different polyfunctional isocyanate.

10. The adhesive or coating of claim 1, wherein the emulsifiable polyisocyanate has a functionality of 2 to 4.5.

11. The adhesive or coating according to any one of the preceding claims further comprising a water dispersible or soluble polymer.

12. The adhesive or coating according to any one of the preceding claims, which is an aqueous adhesive.

13. The adhesive or coating according to any one of claims 1 to 11, which is an aqueous coating.

14. The aqueous coating of claim 13, which is a crosslinkable two-pack aqueous urethane coating composition comprising an aqueous polyol as a main agent and said emulsifiable polyisocyanate composition as a curing agent.

15. The aqueous coating of claim 13, wherein said emulsifiable polyisocyanate composition is a crosslinking or hardening component.

## Patentansprüche

1. Wässriger Klebstoff oder wässrige Beschichtung aus einer emulgierbaren Polyisocyanatzusammensetzung, die das Reaktionsprodukt von
(a) einem aliphatischen Polyisocyanat und
(b) einem Emulgator umfasst,
wobei das Polyisocyanat mindestens 10 Gew.-% Isocyanurateinheiten enthält und eine Mischung von zwei oder mehr von cis-1,3-Bis(isocyanatomethyl)cyclohexan, trans-1,3-Bis(isocyanatomethyl)cyclohexan, cis-1,4-Bis(isocyanatomethyl)cyclohexan oder trans-1,4-Bis(isocyanatomethyl)cyclohexan oder ein Reaktionsprodukt der Mischung umfasst, mit der Maßgabe, dass die isomere Mischung mindestens 5 Gew.-% des trans-1,4-Bis(isocyanatomethyl)cyclohexans umfasst.

2. Klebstoff oder Beschichtung nach Anspruch 1, wobei der Emulgator mindestens eine hydrophile Gruppe und mindestens eine mit Isocyanat reaktionsfähige Gruppe besitzt, die ausgewählt ist aus Hydroxyl, Mercapto oder primärem oder sekundärem Amin.

3. Klebstoff oder Beschichtung nach Anspruch 1, wobei der Emulgator eine von einer Carboxyl- oder Sulfogruppe hergeleitete anionische Gruppe enthält.

4. Klebstoff oder Beschichtung nach Anspruch 1, wobei der Emulgator ein Polyalkylenether oder ein Polymer ist, das ein Copolymer von Alkylenoxiden ist,
wobei das Alkylenoxid ein Ethylenoxid, Propylenoxid, Butylenoxid oder Styroloxid ist und die Copolymere mindestens 1 Polyethylenoxidkette enthalten, die mindestens 5 Ethylenoxideinheiten enthält, und das Molekulargewicht des Polyalkylenoxids von 300 bis 2500 beträgt.

5. Klebstoff oder Beschichtung nach einem der vorhergehenden Ansprüche,
wobei das Polyisocyanat und der Emulgator an einem NCO zu einer mit Isocyanat reaktionsfähigen Gruppe an dem Emulgator in einem Verhältnis umgesetzt werden, dass sich ein emulgierbares Polyisocyanat ergibt, das 0,5 bis 30 Gew.-% freies NCO enthält.

6. Klebstoff oder Beschichtung nach einem der vorhergehenden Ansprüche,
wobei das Polyisocyanat mindestens 10 Gew.-% der 1,4-Isomere umfasst.

7. Klebstoff oder Beschichtung nach Anspruch 6, wobei das Polyisocyanat mindestens 20 bis 80 Gew.-% der 1,4-Isomere umfasst.

8. Klebstoff oder Beschichtung nach einem der vorhergehenden Ansprüche,
wobei das Polyisocyanat mindestens 20 Gew.-% Isocyanurateinheiten umfasst.

9. Klebstoff oder Beschichtung nach einem der vorhergehenden Ansprüche,
wobei die Zusammensetzung 0,1 bis 50 Gew.-% mindestens eines anderen polyfunktionellen Isocyanats umfasst.

10. Klebstoff oder Beschichtung nach Anspruch 1, wobei das emulgierbare Polyisocyanat eine Funktionalität von 2 bis 4,5 besitzt.

11. Klebstoff oder Beschichtung nach einem der vorhergehenden Ansprüche, ferner umfassend ein wasserdispergierbares oder wasserlösliches Polymer.

12. Klebstoff oder Beschichtung nach einem der vorhergehenden Ansprüche,
wobei es sich um einen wässrigen Klebstoff handelt.

13. Klebstoff- oder Beschichtung nach einem der Ansprüche 1 bis 11, wobei es sich um eine wässrige Beschichtung handelt.

14. Wässrige Beschichtung nach Anspruch 13, wobei es sich um eine vernetzbare wässrige Zweikomponenten-Urethanbeschichtungszusammensetzung handelt, die ein wässriges Polyol als Hauptbestandteil und die emulgierbare Polyisocyanatzusammensetzung als Härtungsmittel umfasst.

15. Wässrige Beschichtung nach Anspruch 13, wobei die emulgierbare Polyisocyanatzusammensetzung ein Vernetzungs- oder Härtungsbestandteil ist.

## Revendications

1. Adhésif aqueux ou revêtement aqueux, comprenant une composition de polyisocyanate émulsifiable comprenant un produit de réaction
a) d'un polyisocyanate aliphatique
b) et d'un émulsifiant,
dans lequel le polyisocyanate contient au moins 10 % en poids de motifs isocyanurate et comprend un mélange de deux ou plus des cis-1,3-bis(iso-cyanatométhyl)cyclohexane, trans-1,3-bis(isocyanatométhyl)cyclohexane, cis-1,4-bis(isocyanatométhyl)cyclohexane et trans-1,4-bis(isocyanatomé-thyl)cyclohexane, ou un produit de réaction d'un tel mélange, sous réserve que ledit mélange d'isomères contienne au moins 5 % en poids de trans-1,4-bis(isocyanatométhyl)cyclohexane.

2. Adhésif ou revêtement conforme à la revendication 1, dans lequel l'émulsifiant comporte au moins un groupe hydrophile et au moins un groupe réactif vis-à-vis du groupe isocyanato, choisi parmi les groupes hydroxyle, sulfhydryle et amino primaire ou secondaire.

3. Adhésif ou revêtement conforme à la revendication 1, dans lequel l'émulsifiant comporte un groupe anionique dérivé d'un groupe carboxyle ou sulfo.

4. Adhésif ou revêtement conforme à la revendication 1, dans lequel l'émulsifiant est un polyéther poly(oxyalkylène) ou un polymère qui est un copolymère d'oxydes d'alkylène pour lequel les oxydes d'alkylène sont l'oxyde d'éthylène et l'oxyde de propylène, l'oxyde de butylène et/ou l'oxyde de styrène, lequel copolymère contient au moins 1 chaîne de type poly(oxyéthylène) comportant au moins 5 motifs dérivés de l'oxyde d'éthylène et la masse moléculaire du poly(oxyalkylène) vaut de 300 à 2500.

5. Adhésif ou revêtement conforme à l'une des revendications précédentes, pour lequel on fait réagir le polyisocyanate et l'émulsifiant en des quantités telles que le rapport des groupes isocyanato NCO aux groupes de l'émulsifiant réactifs vis-à-vis du groupe isocyanato est approprié pour que l'on obtienne un polyisocyanate émulsifiable comportant de 0,5 à 30 % en poids de groupes isocyanato libres.

6. Adhésif ou revêtement conforme à l'une des revendications précédentes, dans lequel le polyisocyanate comprend au moins 10 % en poids d'isomères 1,4.

7. Adhésif ou revêtement conforme à la revendication 6, dans lequel le polyisocyanate comprend au moins 20 à 80 % en poids d'isomères 1,4.

8. Adhésif ou revêtement conforme à l'une des revendications précédentes, dans lequel le polyisocyanate comprend au moins 20 % en poids de motifs isocyanurate.

9. Adhésif ou revêtement conforme à l'une des revendications précédentes, dans lequel la composition comprend de 0,1 à 50 % en poids d'au moins un isocyanate polyfonctionnel différent.

10. Adhésif ou revêtement conforme à la revendication 1, dans lequel le polyisocyanate émulsifiable comporte 2 à 4,5 groupes fonctionnels.

11. Adhésif ou revêtement conforme à l'une des revendications précédentes, qui comprend en outre un polymère soluble ou dispersable dans l'eau.

12. Adhésif ou revêtement conforme à l'une des revendications précédentes, qui est un adhésif aqueux.

13. Adhésif ou revêtement conforme à l'une des revendications précédentes, qui est un revêtement aqueux.

14. Revêtement aqueux conforme à la revendication 13, qui est une composition aqueuse de revêtement par polyuréthane, réticulable et en deux parties, comprenant une solution aqueuse de polyol en tant que composant principal et ladite composition de polyisocyanate émulsifiable en tant qu'agent durcisseur.

15. Revêtement aqueux conforme à la revendication 13, dans lequel ladite composition de polyisocyanate émulsifiable constitue un composant réticulant ou durcisseur.
